# EUROPÄISCHE PATENTSCHRIFT

(11) **EP 1 738 634 B1**
(45) Veröffentlichungstag und Bekanntmachung des Hinweises auf die Patenterteilung: **15.10.2008**
(21) Anmeldenummer: 06115760.8
(22) Anmeldetag: 21.06.2006
(51) Int. Cl.: A01D 61/00

(54) **Erntegutaufnahmeeinrichtung und Erntemaschine**
Crop collecting device and harvesting machine
Dispositif de ramassage de produits de récolte ainsi que machine de récolte.

(30) Priorität: 29.06.2005 DE 102005030702
(43) Veröffentlichungstag der Anmeldung: 03.01.2007
(73) Patentinhaber: Deere & Company, Moline, IL 61265-8098 (US)
(72) Erfinder: Josset, Etienne, 48653 Coesfeld (DE)
(74) Vertreter: Löser, Iris

(56) Entgegenhaltungen:
- DE-A1- 4 021 030
- DE-A1- 10 241 216
- FR-A1- 2 776 469
- US-A- 4 622 805

## Beschreibung

Die Erfindung betrifft eine Erntegutaufnahmeeinrichtung, insbesondere in der Art einer Pick-Up, mit einem Rahmen und einer an dem Rahmen in einem Bewegungsbereich begrenzt beweglich vorgesehenen Fördervorrichtung, wobei der Bewegungsbereich verändert werden kann, sowie eine Erntemaschine mit einer derartigen Erntegutaufnahmeeinrichtung.

Bekannte Erntegutaufnahmeeinrichtungen, wie sie beispielsweise in der DE-A1-102 41 216 beschrieben werden, weisen eine Fördervorrichtung auf, welche von einem Rahmen beweglich aufgenommen wird, so dass ihre Stellung sich an die Menge des aufgenommenen Erntegutes anpassen kann. Der Bewegungsbereich derartiger Fördervorrichtungen wird durch mit dem Rahmen fest verbundene Anschläge begrenzt.

Die DE-A1-40 21 030 zeigt einen Mähtisch einer Erntemaschine mit einer in Fahrtrichtung hinter dem Schneidwerk gelagerten Einzugstrommel und gegebenenfalls damit zusammenwirkenden Haspel, wobei die Lagerung der Einzugstrommel in Bezug auf das Schneidwerk in horizontaler Richtung vor- und zurückverstellbar ist und gegebenenfalls auch in vertikaler Richtung gegenüber dem Boden der Schneidwerkwanne auf- und ab verstellbar ist.

Das der Erfindung zu Grunde liegende Problem wird darin gesehen, dass Verstopfungen insbesondere im Bereich der Fördervorrichtungen häufig ein manuelles Eingreifen einer Bedienungsperson erfordern, da die Verstopfung durch einen Reversierbetrieb nicht vollständig beseitig werden kann.

Dieses Problem wird erfindungsgemäß durch die Lehre der Patentansprüche 1 bzw. 12 gelöst, wobei in den weiteren Patentansprüchen Merkmale aufgeführt sind, welche die Lösung in vorteilhafter Weise weiterentwickeln.

Ist der Bewegungsbereich der Fördervorrichtung veränderbar vorgesehen, so kann der durch die Fördervorrichtung begrenzte Bereich, der zu förderndem Erntegut maximal zur Verfügung steht, in Abhängigkeit von den Betriebsbedingungen der Erntegutaufnehmereinrichtung gewählt werden. Dies ist insbesondere bei einem Reversierbetrieb im Sinne einer Umkehr der Förderrichtung der Erntegutaufnehmervorrichtung und/oder auch einer Erntemaschine, an der die Erntegutaufnehmereinrichtung vorgesehen ist, vorteilhaft. Ein Reversieren wird üblicherweise entweder dann vorgenommen, wenn eine Verstopfung vorliegt oder aber wenn ein Metalldetektor anzeigt, dass Metall mit eingezogen wurde, welches wieder ausgeworfen werden sollte. Insbesondere wenn eine Verstopfung im Bereich der Fördervorrichtung vorliegt, nimmt diese in ihrem Bewegungsbereich eine maximale Stellung ein. Darüber hinaus drückt das Erntegut auf die Fördervorrichtung, wodurch diese großen Kräften ausgesetzt ist. Wird nun darüber hinaus reversiert, so drängt aus in Normalbetrieb stromabwärts gelegenen Regionen der Erntegutaufnehmereinrichtung oder einer Erntemaschine weiteres Erntegut nach und verstärkt den Druck, so dass es praktisch unmöglich wird, die Verstopfung ohne menschliches Eingreifen zu entfernen. Wird nun der Bewegungsbereich der Fördervorrichtung verändert, wird beispielsweise ein Verschieben zugelassen, so verändert sich die Verteilung der Kräfte, der Druck lässt nach und das Erntegut kann wieder durch gefördert werden. Insbesondere wird der Bewegungsbereich vergrößert, so dass eine Druckentlastung erfolgen und/oder eine größere Gutmenge durch den Bereich der Fördervorrichtung hindurchtreten kann.

Es kann vorgesehen sein, dass der Bewegungsbereich beispielsweise hydraulisch, beispielsweise durch eine Verstellung von Hydraulikzylindern oder in anderer Art und Weise beispielsweise aktiv durch die Wirkung von Motoren begrenzt bzw. verändert wird. Erfindungsgemäß sind wenigstens ein erster und ein zweiter Anschlag vorgesehen, welche den Bewegungsbereich begrenzen. Um den Bewegungsbereich zu verändern, genügt es dann, die Position nur eines der Anschläge zu verändern. Es können aber auch beide oder weitere Anschläge verstellbar vorgesehen sein.

Es ist denkbar, dass die Fördervorrichtungen horizontal verstellbar vorgesehen sind. Der Bewegungsbereich weist aber vorzugsweise insbesondere eine vertikale Komponente auf. Vorzugsweise ist die Fördervorrichtung an dem Rahmen zumindest im Wesentlichen vertikal schwenkbar angebracht und kann mit ihrer Schwenkbewegung der Menge an insbesondere durch einen Aufnehmer eingebrachten Erntegut folgen.

Hierzu kann die Fördervorrichtung an dem Rahmen vorzugsweise über zwei vorzugsweise horizontal beabstandete Hebelarme anschlossen sein. Diese Hebelarme können beiderseits der Fördervorrichtung vorgesehen sein. Es ist aber auch eine zentrale Anordnung oder die Verwendung nur eines Hebelarms denkbar. Es ist auch eine verschiebliche Lagerung denkbar.

Die Anschläge können horizontal voneinander beabstandet sein. Um den Durchtrittsbereich für das Erntegut in vertikaler Richtung zu begrenzen, sollten sie aber zumindest auch vertikal beabstandet sein. Vorzugsweise ist dann zumindest ein oberer der Anschläge verstellbar vorgesehen, da dieser im Gegensatz zu dem oder den unteren Anschlag/Anschlägen nicht zusätzlich durch Gewichtskräfte beispielsweise der Fördervorrichtung belastet wird.

Die Anschläge können beispielsweise mit der Fördervorrichtung oder an dieser vorgesehenen Gegenanschlägen zusammenwirken. Besonders einfach ist es aber, wenn die Anschläge direkt oder indirekt mit wenigstens einem der Hebelarme zusammenwirken und dessen Schwenkweg begrenzen. Auf diese Weise sind die Anschläge beispielsweise in einfacher Art und Weise zugänglich, da die Hebelarme häufig außerhalb des Rahmens beispielsweise unter Schutzen angeordnet sind.

Es ist möglich, dass der Bewegungsbereich bzw. der oder die Anschläge manuell oder automatisch verstellt werden können. Es ist beispielsweise denkbar, dass eine Bedienungsperson eine Einstellung an der Erntegutaufsammeleinrichtung oder indirekt von der Erntemaschine beispielsweise aus einer Fahrerkabine heraus vornimmt. Eine automatische Einstellung ist insbesondere dann günstig, wenn eine Verstellung des Bewegungsbereichs oder der Position des oder der Anschlags/Anschläge vorgenommen wird, um ein Reversieren im Sinne einer Umkehr der Förderrichtung vorzunehmen.

Insbesondere während eines Reversierens wird üblicherweise die Stellung eines an der Erntegutaufnahmevorrichtung vorgesehen Niederhalters verändert. Dieser Niederhalter wird häufig automatisch bewegt bzw. angehoben. Es ist daher günstig, wenn der Bewegungsbereich bzw. dessen Erstreckung von der Stellung des Niederhalters abhängt und/oder der Niederhalter mit dem verstellbaren Anschlag derart wirksam verbunden ist, dass zumindest eine Stellung des verstellbaren Anschlags von der Stellung des Niederhalters bestimmt wird bzw. abhängt.

Insbesondere in Abhängigkeit von der Geometrie der Erntegutaufnehmervorrichtung ist es beispielsweise denkbar, den verstellbaren Anschlag verschieblich und beispielsweise durch Verschraubungen oder ähnliche Mittel sichern zu können. Insbesondere um eine automatische Verstellung, beispielsweise mittels des oder in Abhängigkeit von dem Niederhalter/s in einfacher Weise vorsehen können, ist es vorteilhaft, den wenigstens einen verstellbaren Anschlag über eine Hebelanordnung, welche vorzugsweise mit dem Niederhalter wirksam verbunden ist, zu verstellen.

Der verstellbare Anschlag kann mit der Hebelanordnung zusammenwirken oder mit dieser verbunden sein. Es ist aber besonders einfach in der Anordnung, wenn der Anschlag durch die Hebelanordnung oder beispielsweise einen einen Bestandteil der Hebelanordnung bildenden Hebel oder einen anderen Bestandteil der Hebelanordnung gebildet wird oder an einem solchen vorgesehen ist.

Die Hebelanordnung kann eine Bewegung, insbesondere die Bewegung des Niederhalters direkt in eine Bewegung des Anschlags überleiten. Da sich der Niederhalter aber auch häufig während eines normalen Betriebs in einem gewissen Bereich bewegt, ist es günstig vorzusehen, dass die Hebelanordnung die Bewegung des Niederhalters verzögert überträgt. Hierzu kann beispielsweise eine Langlochverbindung vorgesehen sein, die anfänglich eine Bewegung des Niederhalters zulässt und eine Bewegung erst dann überträgt, wenn ein Endbereich eines Langlochs mit einem weiteren Bauteil zusammenwirkt.

Es ist denkbar, dass der Anschlag alleine durch Gewichtskräfte in seiner Betriebsstellung gehalten wird. Vorzugsweise ist er aber in Richtung seiner vorzugsweise unteren Betriebsstellung federbelastet.

Derartige Erntegutaufnehmereinrichtungen können an landwirtschaftlichen Erntegeräten bzw. -maschinen, vorzugsweise in der Art von Feldhäckslern, Mähdreschern oder Ballenpressen Verwendung finden.

In der Zeichnung sind nachfolgend näher beschriebene Ausführungsbeispiele der Erfindung dargestellt. Es zeigt:
- Fig. 1: eine landwirtschaftliche Erntemaschine mit einer Erntegutaufnehmereinrichtung, wobei ein Rahmen der Erntegutaufnehmereinrichtung sowie zugehörige Schutze aus Gründen der Übersichtlichkeit nicht dargestellt sind,
- Fig. 2: den in Figur 1 nicht gezeigten Rahmen mit einem Anschlag und einer Hebelanordnung zur Verstellung des Anschlags und einen Niederhalter und einem Hebelarm zur schwenkbaren Lagerung einer Fördervorrichtung an dem Rahmen in einer Betriebsstellung, wobei die Fördervorrichtung eine untere Stellung einnimmt,
- Fig. 3: eine Darstellung gemäß Figur 2 wobei die Fördervorrichtung sich in einer oberen Stellung befindet,
- Fig. 4: eine Darstellung gemäß Figur 2 mit dem Niederhalter und dem Anschlag in einer angehobenen bzw. oberen Reversierposition,
- Fig. 5: eine Darstellung gemäß Figur 4, wobei die Fördervorrichtung eine obere Stellung einnimmt,
- Fig. 6: eine zweite Ausführungsform einer Hebelanordnung zur Verstellung des Anschlags und
- Fig. 7: eine weitere Ausführungsform der Hebelanordnung.

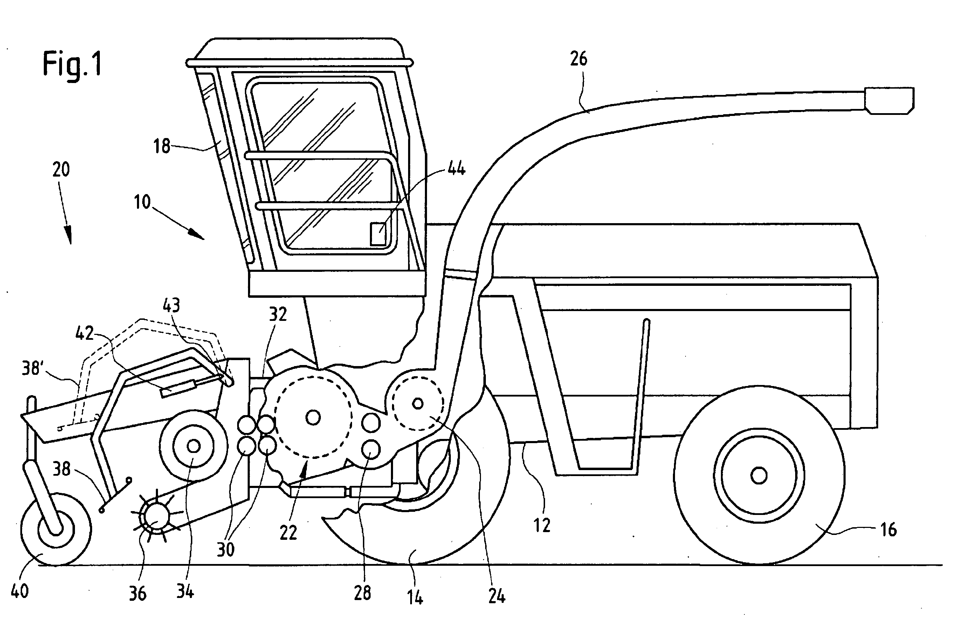

In der Figur 1 ist eine Erntemaschine 10 in der Art eines selbstfahrenden Feldhäckslers dargestellt. Die Erntemaschine 10 baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z.B. Mais, Gras oder dergleichen, wird über Zuführwalzen 30, die innerhalb eines Einzugsgehäuses 32 angeordnet sind, einer Häckseltrommel 22 zugeführt, die es im Zusammenwirken mit einer Gegenschneide 46 in kleine Stücke häckselt und es einer Fördervorrichtung 24 aufgibt. Das Gut verlässt den Feldhäcksler 10 zu einem nebenher fahrenden Transportfahrzeug oder Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

Die Erntegutaufnahmevorrichtung 20 ist in diesem Ausführungsbeispiel als so genannte Pick-up ausgebildet und als selbstständige Einheit ausgestaltet. Die Erntegutaufnahmevorrichtung 20 stützt sich bei der Feldarbeit über Stützräder 40 auf dem Erdboden ab. Die Aufgabe der Erntegutaufnahmevorrichtung 20 besteht darin, auf dem Boden in Schwaden abgelegtes Erntegut verschiedenster Art und Beschaffenheit aufzunehmen und es dem der Erntemaschine 10 zur weiteren Bearbeitung zuzuführen. Hierzu wird die Erntegutaufnahmeeinrichtung 20 während des Erntebetriebes mit geringem Abstand zum Erdboden über das Feld bewegt, während sie zum Transport auf einer Straße oder auf Wegen angehoben wird.

Zu der Erntegutaufnahmevorrichtung 20 gehört eine Fördervorrichtung 34 in Form einer Förderschnecke, die auf an sich bekannte Weise das aufgenommene Gut von den Seiten der Erntegutaufnahmevorrichtung 20 zu einer in der Mitte gelegenen, nicht gezeigten Abgabeöffnung fördert, hinter der die Zuführwalzen 30 folgen, ein wie die Fördervorrichtung drehbar angetriebenen Aufnehmer 36, der unterhalb der Fördervorrichtung 34 angeordnet ist und mit seinen Förderzinken das Gut vom Erdboden anhebt, um es der Fördervorrichtung 34 zu übergeben, und ein Niederhalter 38 in Form eines über dem Aufnehmer 36 angeordneten Bleches. Alternativ könnte der Niederhalter 38 walzenförmig sein oder mehrere Stäbe aufweisen. Die Drehachsen der Fördervorrichtung 34 und des Aufnehmers 36 verlaufen parallel zueinander und zum Erdboden und quer zur Fahrtrichtung des Feldhäckslers 10.

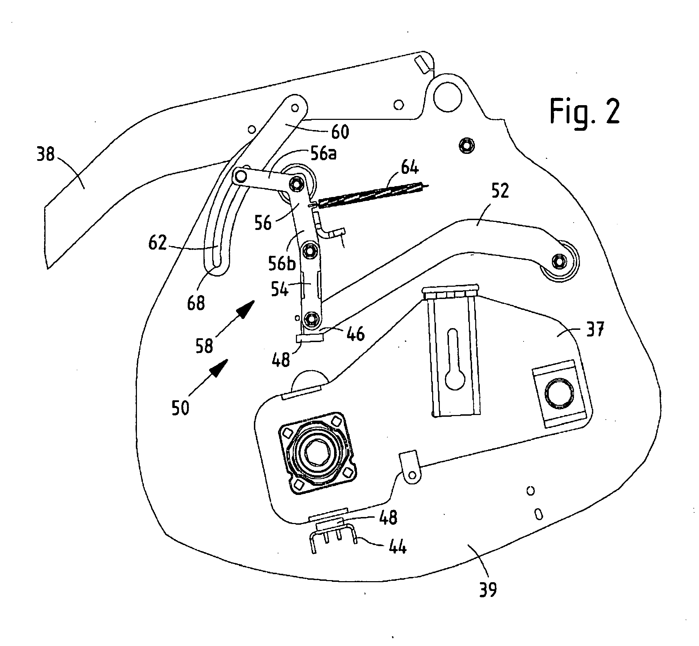

Die relative Lage der Fördervorrichtung 34 zum Aufnehmer 36 ist durch die Lagerung der Fördervorrichtung 34 an Hebelarmen 37 (siehe Figur 2) jedoch veränderbar. Die genannten Hebelarme 37 auf beiden Seiten sind federbelastet um die Fördervorrichtung 34 auf das Gut zu drücken und an einem Rahmen 39 angeschlossen, der in Figur 1 aus Gründen der Übersichtlichkeit nicht dargestellt wird. Hierzu wird daher auf Figur 2 verweisen. Die Position des Niederhalters 38 kann zwischen der Betriebsstellung, in der der Niederhalter 38 in Figur 1 mit durchgehenden Linien gezeichnet ist, und in der der Niederhalter 38 mit dem Aufnehmer 36 zusammenwirkt, und einer Außerbetriebsstellung, in der der Niederhalter mit dem Bezugszeichen 38' gekennzeichnet ist, verstellt werden. Dazu dient ein im vorliegenden Ausführungsbeispiel als Hydraulikzylinder ausgeführter Motor 42, der eingerichtet ist, den Niederhalter 38 entsprechend um eine horizontale, quer zur Fahrtrichtung des Feldhäckslers 10 verlaufende Achse 43 zu drehen. Die Außerbetriebsstellung des Niederhalters 38 erweist sich im Reversierbetrieb, in dem die Zuführwalzen 30, die Fördervorrichtung 34 und der Aufnehmer 36 (optional auch die Häckseltrommel 22) durch in gegenüber normalem Erntebetrieb umgekehrter Drehrichtung betrieben werden, als hilfreich, um verstopftes Material auswerfen zu können. Auch wenn ein innerhalb einer der Zuführwalzen 30 angeordneter, nicht eingezeichneter Metalldetektor anspricht und den Antrieb der Zuführwalzen 30 abschaltet, ist ein Reversieren zweckmäßig.

Um den Niederhalter 38 selbsttätig zwischen der Betriebsstellung und der Außerbetriebsstellung bewegen und den Reversierbetrieb aktivieren zu können, ist eine Steuerung bereitgestellt. Eine derartige selbsttätige Verstellung ist aber nicht zwingend.

Es wird nun auch auf Figur 2 Bezug genommen, in der die Erntegutaufnahmeeinrichtung 20 ausschnittsweise betrachtet wird, wobei der in Figur 1 nicht dargestellte Rahmen 39 sowie der bezogen auf die Fahrtrichtung der Erntemaschine 10 linksseitige Hebelarm 37 gezeigt wird.

Der Schwenkweg des Hebelarms 37 und somit der Fördervorrichtung 34 wird durch einen ersten, unteren Anschlag 44 und einen zweiten, oberen Anschlag 46 begrenzt. Der untere Anschlag 44 ist mit dem Rahmen 39 fest verbunden, beispielsweise verschraubt oder verschweißt. Der obere Anschlag 46 ist beweglich vorgesehen, worauf im Folgenden noch genauer eingegangen wird. Beide Anschläge 44, 46 sind mit einem Kunststoffpuffer 48 versehen, der ein Auftreffen des Hebelarms 37 auf den jeweiligen Anschlag 44, 46 dämpft.

Der obere Anschlag 46 ist über eine Hebelanordnung 50 sowohl mit dem Niederhalter 38 als auch mit dem Rahmen 39 schwenkbar verbunden. Die Hebelanordnung 50 weist einen ersten Hebel 52 auf, welcher einenends schwenkbar mit dem Rahmen verbunden ist und andernends sowohl den oberen Anschlag 46 bildet als auch schwenkbar mit einem zweiten Hebel 54, der mit einem Winkelhebel 56, der mit dem Rahmen ebenfalls schwenkbar verbunden ist und einen ersten Winkelarm 56 und einen zweiten Winkelarm 56b aufweist, ein Kniegelenk 58 bildet. Der Winkelhebel 56 wiederum ist mit einem schwenkbar an dem Niederhalter 38 angebrachten Hebel 60 verbunden, welcher mit einem Langloch 62 versehen ist, in welchem der Hebel 60 verschiebbar geführt wird. An dem Winkelhebel 56 greift darüber hinaus eine Feder 64 in der Art an, dass sie den Winkelhebel 56 in Richtung eines mit dem Rahmen 39 fest verbunden Anschlags 66 belastet. Es wird darauf hingewiesen, dass die gezeigte, bogenförmige Ausgestaltung des Hebels 60 sowie des Langlochs 62 nicht zwingend ist.

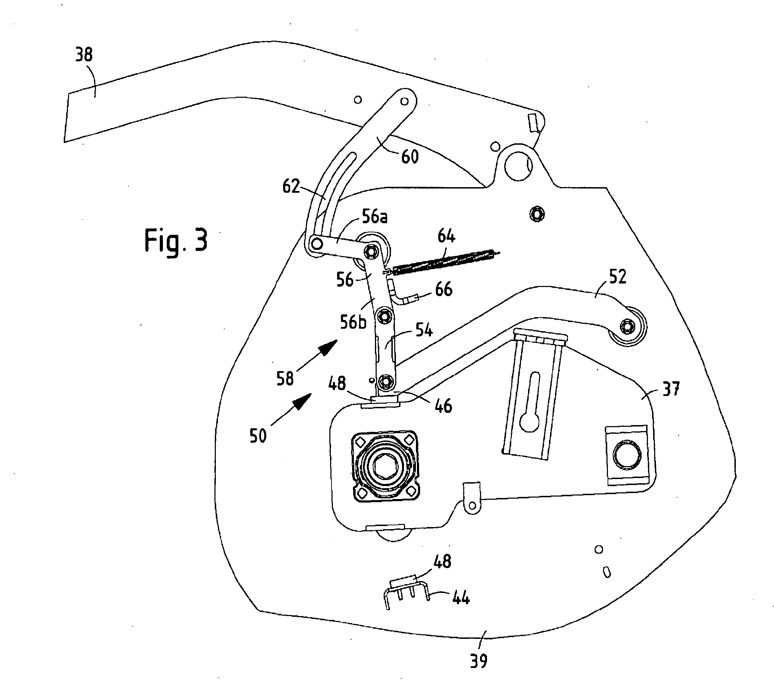

Im Folgenden wird nun auf die Funktionsweise der Hebelanordnung 50 bzw. auf die Wirkungsweise des beweglichen, oberen Anschlags 46 genauer eingegangen. Hierzu werden nun auch die Figuren 3 bis 5 herangezogen.

In Figur 3 ist die Hebelanordnung 50 wie auch in Figur 2 in einer normalen Betriebsstellung dargestellt. Der Niederhalter 38 befindet sich in einer abgesenkten Position, wodurch der Winkelhebel 56 durch die Verbindung mit dem Langloch 26 nicht verschwenkt, sondern durch die Wirkung der Feder 64 in Kontakt mit dem Anschlag 66 gehalten wird. Das Kniegelenk 58 nimmt hierdurch eine überstreckte Stellung ein, in der sich der obere Anschlag 46 in seiner unteren Betriebsstellung befindet, in der er zusammen mit dem unteren Anschlag 44 den Bereich begrenzt, in dem der Hebel 37 verschwenken kann, um es der Fördervorrichtung 34 zu erlauben, sich aufgrund wechselnder Fördergutmengen im Wesentlichen vertikal zu bewegen. In Figur 2 befindet sich die Fördervorrichtung 34 in ihrer unteren und in Figur 3 in ihrer oberen Stellung.

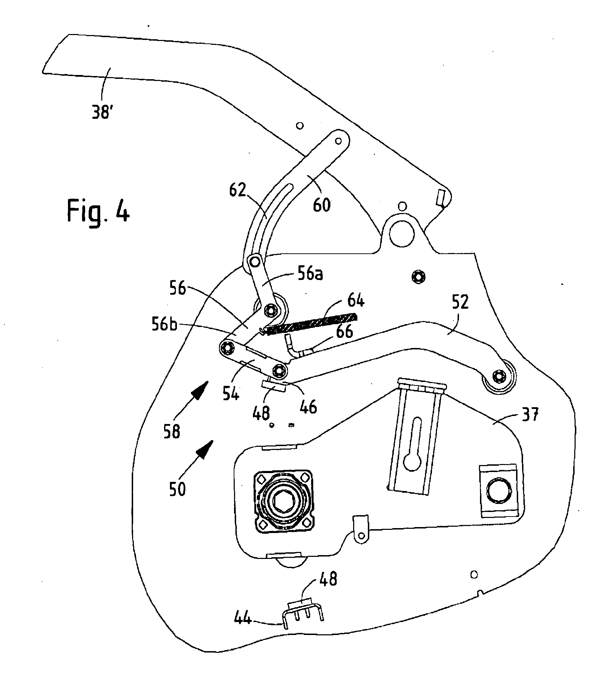

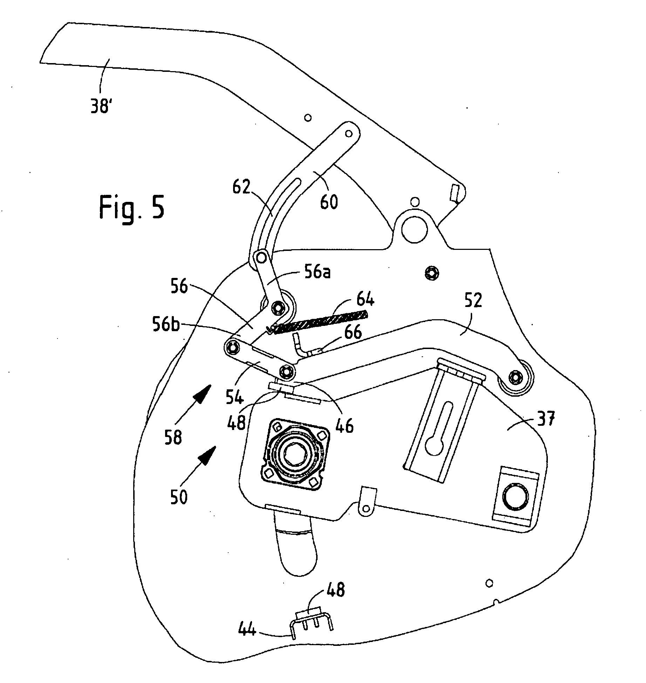

Wie oben bereits beschreiben, wird der Niederhalter 38 zum Reversieren in eine angehobenen Stellung 38' gebracht. Diese Stellung wird in den Figuren 4 und 5 gezeigt. Wird der Niederhalter 38 angehoben, so folgt der Hebel 60 dieser Bewegung nach oben. Da der Winkelhebel 56 in dem Langloch 62 in dem Hebel 60 geführt wird, folgt er der Bewegung des Niederhalters 38 verzögert, sobald ein unterer Endbereich 68 des Langlochs 62 an ihm angreift und er dadurch mitgenommen wird. Im Folgenden verschwenkt der Winkelhebel 56 bzw. der Winkelarm 56a nach oben und der Winkelarm 56b nach vorn. Durch diese Bewegung des Winkelarms 56b wird das Kniegelenk 58 nach vorn gebeugt und der Hebel 52 bewegt sich dem Hebel 54 folgend nach oben, wodurch sich auch der obere Anschlag nach oben bewegt.

Die besondere Geometrie des Kniegelenk 58 erlaubt es, dass dieses in der Betriebsstellung, in der es sich in einem überstrecken Zustand befindet, große Kräfte aufnimmt, aber schon durch einen verhältnismäßig kleine Verlagerung des Winkelhebels 56 nach vorn wegknicken kann, so dass der Anschlag 46 auch dann leicht gelöst werden kann, wenn er durch eine Verstopfung starkem Druck bzw. starken Kräften ausgesetzt ist.

Dem Hebelarm 37 und somit der Fördervorrichtung 34 steht nun ein größerer Bewegungsspielraum zur Verfügung. Dies ist beim Reversieren hilfreich, da dieses häufig aufgrund einer bestehenden Verstopfung im Zufuhrstrang der Erntemaschine 10 durchgeführt wird. Üblicherweise treten hierbei hohe Kräfte, insbesondere im Bereich der Fördervorrichtung 34 auf, die häufig nur durch ein manuelles Eingreifen überwunden werden können. Durch die beschriebene Vergrößerung des Bewegungsbereichs von Hebelarm 37 und Fördervorrichtung 34 wird der Transport von Erntegut bzw. Verstopfungen aus dem Bereich der Fördervorrichtung erleichtert. Darüber hinaus kann Material aus dem Inneren der Erntemaschine bzw. im Normalbetrieb der Erntemaschine weiter stromaufwärts gelegenen Bereichen verbessert abtransportiert werden. Auf diese Weise können Verstopfungen entfernt werden, ohne das eine Bedienungsperson manuell eingreifen muss, beispielsweise indem sie Erntegut aus der Erntegutaufnahmeeinrichtung 20 herauszieht, und allgemein ein Reversieren erleichtert werden.

Ist das Reversieren beendet, wird der Niederhalter automatisch oder auch manuell abgesenkt. Die Hebelanordnung 50 bewegt sich durch die Gewichtskraft der Fördereinrichtung 34 sowie der übrigen Bauteile nach unten. Die Feder 64 zieht den Winkelarm 56b des Winkelhebels 46 wieder an den Anschlag 66 heran, so dass das Kniegelenk 58 wieder seine überstreckte Betriebsstellung einnimmt, welche einem ungewollten nach vorn Knicken und bzw. einer ungewollten Bewegung des Anschlags 46 nach oben entgegenwirkt und die großen im Betrieb und insbesondere bei einem Verstopfen auftretenden Kräfte aufnehmen kann.

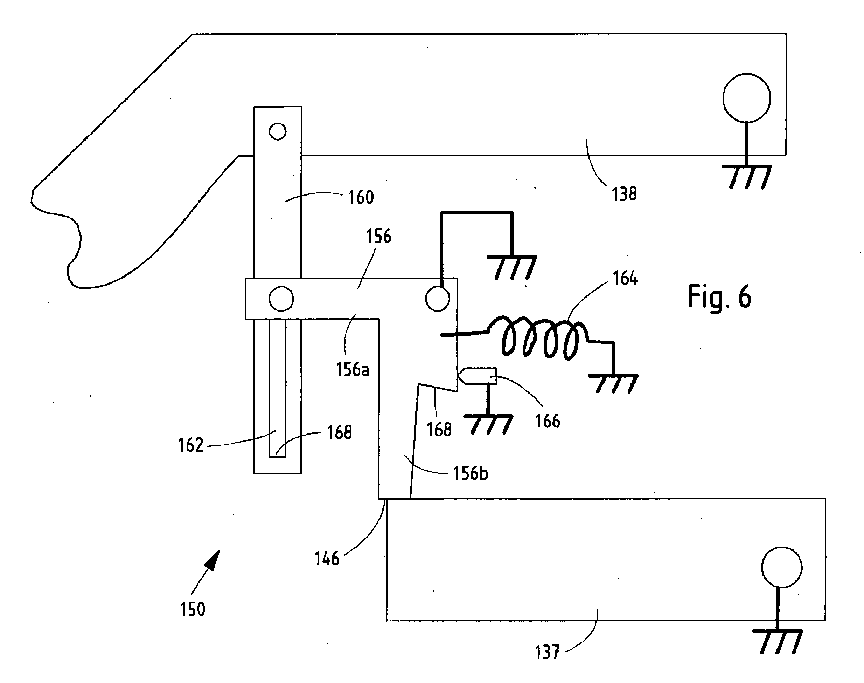

Es wird nun Bezug auf Figur 6 Bezug genommen, in der ein weiteres Ausführungsbeispiel der vorliegenden Erfindung gezeigt wird, wobei den bisherigen Bezugszeichen die Ziffer 1 vorangestellt wird.

Die Hebelanordnung gemäß Figur 6 weist einen wiederum schwenkbar mit dem hier nicht gezeigten Rahmen 39 verbundenen Winkelhebel 156 mit ersten und zweiten Winkelarmen 156a, 156b auf. Der Anschlag 146 ist direkt an einem Endbereich des Winkelarms 156b vorgesehen bzw. wird durch diesen gebildet. Der Winkelarm wird wiederum durch die Wirkung einer Feder 164 in Richtung eines Anschlags 166 belastet. Der Winkelarm 156 wird durch eine Verbindung mit einem Langloch 162 in einem Hebel 160, der gemäß dem ersten Ausführungsbeispiel mit dem Niederhalter 138 verbunden ist, entsprechend diesem ersten Ausführungsbeispiel geführt.

Wird der Niederhalter 138 nach oben bewegt, so verschwenkt der Winkelhebel bzw. der erste Winkelarm 156a nach oben und der zweite Winkelarm im Wesentlichen nach vorn, wodurch der Hebelarm 137 nicht länger an dem Anschlag anliegt und nach oben verschwenken kann. Der Winkelhebel 156 weist neben diese Anschlag 146 einen weiteren Anschlag 168 auf, der bezogen auf den ersten Anschlag 146 nach oben versetzt ist. Gibt nun der erste Anschlag 146 den Hebelarm 137 frei, so bewegt sich dieser nach oben, bis er an dem weiteren Anschlag 168 zur Anlage kommt, wodurch sein Bewegungsbereich im Reversierbetrieb begrenzt wird.

Ist das Reversieren abgeschlossen und die Verstopfung beseitigt, bewegt sich der Hebelarm 137 aufgrund des Gewichts der Fördervorrichtung 34 und optional durch die Wirkung einer nicht gezeigten Feder nach unten, wodurch er nicht länger an dem weiteren Anschlag 168 anliegt und der Winkelhebel 156 durch eine dem Niederhalter folgenden Bewegung der Hebeleinrichtung 150 wieder in seine Betriebsstellung gebracht werden kann, in der eine Bewegung des Hebelarms 137 und somit der Aufsammeleinrichtung wiederum durch den Anschlag 146 begrenzt wird.

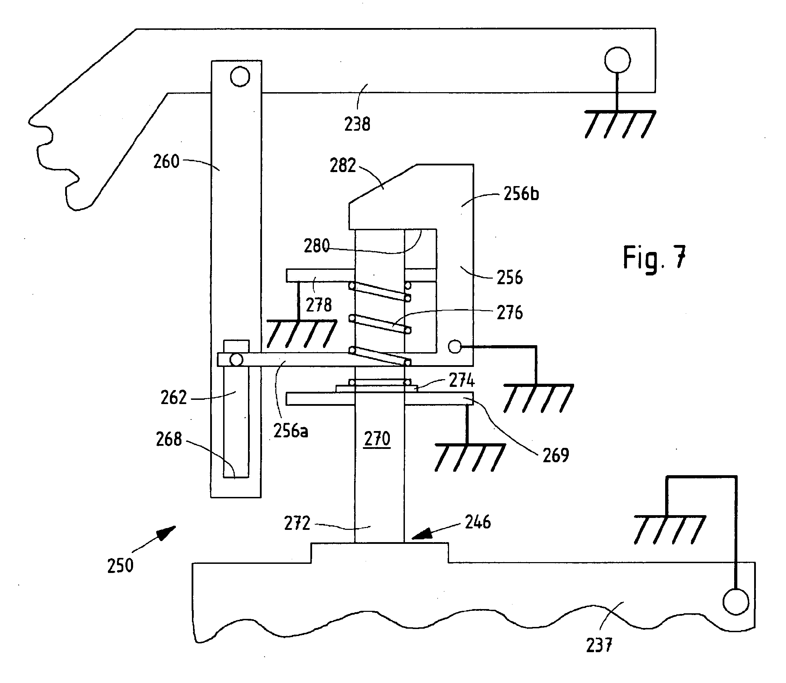

Es wird nun auf Figur 7 Bezug genommen, in der ein weiteres Ausführungsbeispiel der vorliegenden Erfindung gezeigt wird, wobei die Bezugszeichen bei Bauteilen gleicher Funktion unter Voranstellen einer "2" beibehalten werden.

Auch die in Figur 7 gezeigte Ausführungsform weist eine Hebelanordnung 250 mit einem in einem Langloch 262 in einem mit dem Niederhalter 238 verbundenen Hebel 260 geführten, schwenkbaren Winkelhebel 256 mit einem ersten und einem zweiten Winkelarm 256a, 256b auf. Der Winkelhebel 256 wirkt mit einem in einem ersten Lager 269 verschiebbar an dem nicht gezeigten Rahmen 39 gelagerten Anschlagelement 270 zusammen, welches mit seinem dem Hebelarm 237 zugewandten Endbereich 272 den oberen Anschlag 246 bildet. Das Anschlagelement 270 weist eine oberhalb das Lagers 269 angeordnete Manschette 274 auf, welche mit einer auf das Anschlagelement 270 aufgesetzten Feder 276 derart zusammenwirkt, dass die Feder 276 die Manschette 274 und somit das Anschlagelement 270 nach unten, in Anlage mit dem Lager 269 drängt. Andernends liegt die Feder 276 an einem an dem Rahmen 39 vorgesehenen Federanschlag 278 an. Befindet sich der Niederhalter 238 in seiner abgesenkten Stellung, so wird das Anschlagelement 270 durch einen als Anschlag 280 ausgebildeten Endbereich 282 des Winkelarms 256b in dieser Stellung gesichert.

Wird der Niederhalter 238 zum Reversieren angehoben, so folgt der Winkelhebel 256 gemäß der Beschreibung der vorhergehenden Ausführungsbeispiele dessen Bewegung. Der Winkelarm 256 verschwenkt hier allerdings nach rückwärts, wodurch der Anschlag 280 das Anschlagelement 270 freigibt und dieses durch die auf den Hebelarms 237 durch das Erntegut bzw. die Verstopfung hervorgerufene Kraft gegen die Wirkung der Feder 276 nach oben bewegt wird. Der Bewegung des Hebelarms 237 wird gemäß dem vorliegenden Ausführungsbeispiel durch den Anschlag 269 oder durch ein Anliegen der Manschette 274 bzw. der auf block gedrückten Feder an dem Federanschlag 278 begrenzt. Es ist aber auch ein separater Anschlag denkbar.

## Patentansprüche

1. Erntegutaufnahmeeinrichtung (20), insbesondere in der Art einer Pick-Up, mit einem Rahmen (39) und einer an dem Rahmen (39) in einem Bewegungsbereich begrenzt beweglich vorgesehenen Fördervorrichtung (34, 134, 234), wobei der Bewegungsbereich verändert werden kann, **dadurch gekennzeichnet, dass** der Bewegungsbereich wenigstens durch einen ersten und einen zweiten Anschlag (44, 46, 146, 246, 168, 280) begrenzt wird, wobei wenigstens einer der Anschläge (46, 146, 246, 168, 280) verstellbar vorgesehen ist.

2. Erntegutaufnahmevorrichtung nach Anspruch 1, **dadurch gekennzeichnet, dass** die Fördervorrichtung (34) an dem Rahmen (39) zumindest im Wesentlichen vertikal schwenkbar angebracht ist.

3. Erntegutaufnahmevorrichtung nach einem oder mehreren der vorherigen Ansprüche, **dadurch gekennzeichnet, dass** die Fördervorrichtung (34) an dem Rahmen (39) über vorzugsweise zwei, vorzugsweise horizontal beabstandete Hebelarme (37, 137, 237) angeschlossen ist.

4. Erntegutaufnahmevorrichtung nach einem oder mehreren der vorherigen Ansprüche, **dadurch gekennzeichnet, dass** die Anschläge (44, 46, 146, 246, 168, 280) zumindest vertikal beabstandet sind, wobei vorzugsweise zumindest ein oberer der Anschläge (46, 146, 246, 168, 280) verstellbar vorgesehen ist.

5. Erntegutaufnahmevorrichtung nach einem oder mehreren der vorherigen Ansprüche, **dadurch gekennzeichnet, dass** wenigstens einer der Anschläge (44, 46, 146, 246, 168, 280) mit wenigstens einem der Hebelarme (37, 137, 237) zusammenwirkt.

6. Erntegutaufnahmevorrichtung nach einem oder mehreren der vorherigen Ansprüche, **dadurch gekennzeichnet, dass** der Bewegungsbereich und/oder der verstellbare Anschlag (46, 146, 246, 168, 280) manuell und/oder automatisch verändert werden/verstellt werden kann.

7. Erntegutaufnahmevorrichtung nach einem oder mehreren der vorherigen Ansprüche, **gekennzeichnet durch** einen vorzugsweise automatisch beweglichen Niederhalter (38, 138, 238), wobei die Erstreckung des Bewegungsbereich von der Stellung des Niederhalters (38, 138, 238) abhängt und/oder der Niederhalter (38, 138, 238) mit dem verstellbaren Anschlag (46, 146, 246, 168, 280) derart wirksam verbunden ist, dass zumindest eine Stellung des verstellbaren Anschlags (46, 146, 246, 168, 280) von der Stellung des Niederhalters (38, 138, 238) bestimmt wird bzw. abhängt.

8. Erntegutaufnahmevorrichtung nach einem oder mehreren der Ansprüche 2 bis 7, **dadurch gekennzeichnet, dass** der verstellbare Anschlag (46, 146, 246, 168, 280) mittels einer Hebelanordnung (50, 150, 250) verstellt wird, welche vorzugsweise mit dem Niederhalter (38, 138, 238) wirksam verbunden ist.

9. Erntegutaufnahmevorrichtung nach Anspruch 8, **dadurch gekennzeichnet, dass** der verstellbare Anschlag (46, 146, 246, 168, 280) durch die Hebelanordnung (50, 150, 250) oder einen Bestandteil derselben gebildet wird.

10. Erntegutaufnahmevorrichtung nach Anspruch 8 oder 9, **dadurch gekennzeichnet, dass** die Hebelanordnung (50, 150, 250) die Bewegung des Niederhalters (38, 138, 238) verzögert, beispielsweise mittels einer Langlochverbindung überträgt.

11. Erntegutaufnahmevorrichtung nach einem oder mehreren der Ansprüche 2 bis 10, **dadurch gekennzeichnet, dass** der verstellbare Anschlag (46, 146, 246, 168, 280) in Richtung seiner vorzugsweise unteren Betriebsstellung federbelastet ist.

12. Erntemaschine (10), insbesondere in der Art eines Feldhäckslers, eines Mähdreschers oder einer Ballenpresse, **gekennzeichnet durch** eine Erntegutaufnahmeinrichtung (20) nach einem oder mehreren der vorherigen Ansprüche.

## Claims

1. Crop collecting device (20), in particular in the manner of a pick-up, with a frame (39) and a conveying device (34, 134, 234) which is provided on the frame (39) in a manner such that it is movable to a limited extent within a movement range, wherein the movement range can be changed, **characterized in that** the movement range is limited at least by a first and a second stop (44, 46, 146, 246, 168, 280), with at least one of the stops (46, 146, 246, 168, 280) being provided in an adjustable manner.

2. Crop collecting device according to Claim 1, **characterized in that** the conveying device (34) is fitted to the frame (39) in a manner such that it can be pivoted at least substantially vertically.

3. Crop collecting device according to one or more of the preceding claims, **characterized in that** the conveying device (34) is connected to the frame (39) via preferably two, preferably horizontally spaced lever arms (37, 137, 237).

4. Crop collecting device according to one or more of the preceding claims, **characterized in that** the stops (44, 46, 146, 246, 168, 280) are spaced at least vertically, with preferably at least an upper one of the stops (46, 146, 246, 168, 280) being provided in an adjustable manner.

5. Crop collecting device according to one or more of the preceding claims, **characterized in that** at least one of the stops (44, 46, 146, 246, 168, 280) interacts with at least one of the lever arms (37, 137, 237).

6. Crop collecting device according to one or more of the preceding claims, **characterized in that** the movement range and/or the adjustable stop (46, 146, 246, 168, 280) can be changed/adjusted manually and/or automatically.

7. Crop collecting device according to one or more of the preceding claims, **characterized by** a preferably automatically movable holding-down device (38, 138, 238), with the extent of the movement range depending on the position of the holding-down device (38, 138, 238), and/or the holding-down device (38, 138, 238) being operatively connected to the adjustable stop (46, 146, 246, 168, 280) in such a manner that at least one position of the adjustable stop (46, 146, 246, 168, 280) is determined by or depends on the position of the holding-down device (38, 138, 238).

8. Crop collecting device according to one or more of Claims 2 to 7, **characterized in that** the adjustable stop (46, 146, 246, 168, 280) is adjusted by means of a lever arrangement (50, 150, 250) which is preferably operatively connected to the holding-down device (38, 138, 238).

9. Crop collecting device according to Claim 8, **characterized in that** the adjustable stop (46, 146, 246, 168, 280) is formed by the lever arrangement (50, 150, 250) or by a component of the same.

10. Crop collecting device according to Claim 8 or 9, **characterized in that** the lever arrangement (50, 150, 250) delays the movement of the holding-down device (38, 138, 238), for example transmits it by means of an elongated hole connection.

11. Crop collecting device according to one or more of Claims 2 to 10, **characterized in that** the adjustable stop (46, 146, 246, 168, 280) is spring-loaded in the direction of its preferably lower operative position.

12. Harvesting machine (10), in particular in the manner of a field chopper, a combine harvester or a baler, **characterized by** a crop collecting device (20) according to one or more of the preceding claims.

## Revendications

1. Dispositif de ramassage de produits de récolte (20), en particulier du type Pick-up, comprenant un châssis (39) et un dispositif de transport (34, 134, 234) prévu sur le châssis (39) de manière déplaçable de façon limitée dans une plage de déplacement, la plage de déplacement pouvant être modifiée, **caractérisé en ce que** la plage de déplacement est limitée au moins par une première et une deuxième butée (44, 46, 146, 246, 168, 280), au moins l'une des butées (46, 146, 246, 168, 280) étant réglable.

2. Dispositif de ramassage de produits de récolte selon la revendication 1, **caractérisé en ce que** le dispositif de transport (34) est monté de manière à au moins pouvoir pivoter essentiellement verticalement sur le châssis (39).

3. Dispositif de ramassage de produits de récolte selon l'une quelconque ou plusieurs des revendications précédentes, **caractérisé en ce que** le dispositif de transport (34) est raccordé au châssis (39) par le biais de préférence de deux bras de levier (37, 137, 237) espacés de préférence horizontalement.

4. Dispositif de ramassage de produits de récolte selon l'une quelconque ou plusieurs des revendications précédentes, **caractérisé en ce que** les butées (44, 46, 146, 246, 168, 280) sont espacées au moins verticalement, de préférence au moins une butée supérieure des butées (46, 146, 246, 168, 280) étant réglable.

5. Dispositif de ramassage de produits de récolte selon l'une quelconque ou plusieurs des revendications précédentes, **caractérisé en ce qu'**au moins l'une des butées (44, 46, 146, 246, 168, 280) coopère avec au moins l'un des bras de levier (37, 137, 237).

6. Dispositif de ramassage de produits de récolte selon l'une quelconque ou plusieurs des revendications précédentes, **caractérisé en ce que** la plage de déplacement et/ou la butée réglable (46, 146, 246, 168, 280) peut ou peuvent être modifiées ou réglées manuellement et/ou automatiquement.

7. Dispositif de ramassage de produits de récolte selon l'une quelconque ou plusieurs des revendications précédentes, **caractérisé par** un dispositif de maintien (38, 138, 238) déplaçable de préférence automatiquement, l'étendue de la plage de déplacement dépendant de la position du dispositif de maintien (38, 138, 238) et/ou le dispositif de maintien (38, 138, 238) étant connecté fonctionnellement à la butée réglable (46, 146, 246, 168, 280) de telle sorte qu'au moins une position de la butée réglable (46, 146, 246, 168, 280) soit déterminée par ou dépende de la position du dispositif de maintien (38, 138, 238).

8. Dispositif de ramassage de produits de récolte selon l'une quelconque ou plusieurs des revendications 2 à 7, **caractérisé en ce que** la butée réglable (46, 146, 246, 168, 280) est réglée au moyen d'un agencement de levier (50, 150, 250) qui est de préférence connecté fonctionnellement au dispositif de maintien (38, 138, 238).

9. Dispositif de ramassage de produits de récolte selon la revendication 8, **caractérisé en ce que** la butée réglable (46, 146, 246, 168, 280) est formée par l'agencement de levier (50, 150, 250) ou par un constituant de celui-ci.

10. Dispositif de ramassage de produits de récolte selon la revendication 8 ou 9, **caractérisé en ce que** l'agencement de levier (50, 150, 250) ralentit le mouvement du dispositif de maintien (38, 138, 238), par exemple le transmet au moyen d'une connexion à trou oblong.

11. Dispositif de ramassage de produits de récolte selon l'une quelconque ou plusieurs des revendications 2 à 10, **caractérisé en ce que** la butée réglable (46, 146, 246, 168, 280) est sollicitée par ressort dans la direction de sa position de fonctionnement de préférence inférieure.

12. Machine de récolte (10), en particulier du type d'une faucheuse-hacheuse, d'une moissonneuse-batteuse ou d'une presse à balles, **caractérisée par** un dispositif de ramassage de produits de récolte (20) selon l'une quelconque ou plusieurs des revendications précédentes.
